# NEW EUROPEAN PATENT SPECIFICATION

(11) **EP 2 406 313 B2**
(45) Date of publication and mention of the opposition decision: **24.04.2024**
(45) Mention of the grant of the patent: 25.02.2015
(21) Application number: 10722727.4
(22) Date of filing: 15.03.2010
(51) Int. Cl.: C08L 23/10

(54) **MACHINE DIRECTION ORIENTED FILM FOR LABELS**
IN MASCHINENRICHTUNG ORIENTIERTE FOLIE FÜR ETIKETTEN
FILM ORIENTÉ DANS LE SENS MACHINE POUR DES ÉTIQUETTES

(30) Priority: 13.03.2009 US 160032 P; 30.06.2009 US 221665 P; 29.12.2009 US 290537 P
(43) Date of publication of application: 18.01.2012
(73) Proprietor: UPM Raflatac Oy, 33310 Tampere (FI)
(72) Inventor: MITCHELL, Noel, 42111 Wuppertal (DE); SAXBERG, Tom, FI-33230 Tampere (FI)
(74) Representative: Hoffmann Eitle
(86) International application number: PCT/FI2010/050195
(87) International publication number: WO 2010/103191

(56) References cited:
- EP-A1- 1 457 314
- EP-A2- 0 492 942
- WO-A1-98/32596
- WO-A1-03/029346
- JP-A- 3 130 150
- JP-A- 10 212 361
- US-A- 5 594 070
- US-A1- 2004 077 787

## Description

### Cross reference to related applications

This application claims priority from US provisional application No 61/290,537 filed Dec 29, 2009, US provisional application No 61/221,665 filed June 30, 2009 and US provisional application 61/160,032 filed March 13, 2009.

### Field of the Invention

The present invention relates to self-adhesive labelling. Self-adhesive labelling, which is also known as Pressure Sensitive Adhesive labelling (PSA labelling) or self-stick adhesive labelling is a form of labelling where the adhesive forms a bond when pressure is applied on the label, adhering the adhesive label with the item to be labelled. More specifically, the invention relates to new type of machine direction oriented (MDO) plastic films. This invention is usable in any applications using the plastic films and especially using the plastic films for labelling products. Typical label applications and end-use areas range from personal-care and home-care product labelling to food and beverage labelling and labelling of industrial items, for example containers such as chemical drums.

### Background of the Invention

Self-adhesive labels are well known in the art. Label webs for self-adhesive labels generally consist of a release liner, a face material and an adhesive attached to the face material for adhering said label to a substrate. During converting the label webs are printed and die-cut into individual labels, the matrix of label web is stripped off and in a separate labelling process the labels are separated from the liner and transferred to the substrate.

Known label face material may be either paper or plastic film or combination of these. Through plastic film formulation and production methods the film characteristics, like opacity and clarity, ease of die cutting, suitability for the printing process, conformability, stiffness for the face material of the label can be varied.

There are numerous requirements for self-adhesive labels and thus for the label materials. In order to achieve cost-effective, environmental- and end-user-friendly labels the labels should have high and even quality, good visual appearance and minimum material costs. Also label converting (printing, die-cutting, waste matrix stripping) and automated, high-speed labelling lines set requirements for labels and label materials.

Conformability of the label material combined with sufficient mechanical (strength, stiffness) properties is very important. Conformability defines the capability of the label to conform smoothly to the contour of the substrate even when this is curved in two-dimensions. Thus label material should be flexible enough to conform with the underlying contour without wrinkles. A suitable combination of conformability together with other mechanical properties, for example strength, is not simple to achieve.

Since environmental aspects play an increasing role, also the amount of raw material should be low and thin plastic films are preferred.

Polypropylene (PP) is a well known thermoplastic polymer, used in a wide variety of applications, including packaging, textiles, plastic parts and reusable containers of various types, laboratory equipment, loudspeakers, automotive components, and polymer banknotes to name just a few examples. Polypropylene can be produced in several forms that differ in their stereo configuration. Most important commercially is the isotactic form, in which all of the methyl side groups are located on the same side of the polymer chain. There are three general types of PP: homopolymer, random copolymer and block copolymer. Homopolymers are polymers of propylene only and copolymers are polymers of propylene and comonomer. Comonomers are typically olefins like ethylene and butene.

Polyethylene (PE) is a thermoplastic polymer used in many consumer products, most notably for example in the plastic shopping bags. Polyethylene is classified into several different categories based mostly on its density and branching. The mechanical properties of PE depend significantly on variables such as the extent and type of branching, the crystal structure and the molecular weight. The lower density of LDPE relative to HDPE is caused by the fact that molecules of LDPE have many more relatively long branches off the main molecular chain. This prevents the molecules from packing as closely together as they do in HDPE. Linear low-density polyethylene, LLDPE, materials have more side branches than LDPE but they are comparatively short. This has the advantage of improving the strength and stiffness of these materials relative to LDPE, as well as the puncture and the anti-tear properties, while retaining the excellent low-temperature toughness of LDPE.

Plastic films are typically produced using either cast or blowing process, which are both well known processes in the prior art. Cast films in many cases provide better gauge control as well as greater kg/hour output. Non-oriented blown or cast PE films are very flexible and conformable, however they are often optically cloudy and in particular the blown films have poorer register control in the printing process due to the poorer gauge control of the film manufacturing process. Non-oriented cast PP films are typically very difficult, practically impossible to die-cut and they also have non-optimal stiffness properties (when as thin films) and thus these films can't be automatically dispensed.

After a plastic film has been formed, it can be stretched using basically two different methods - transverse-direction orientation (TDO) or machine-direction orientation (MDO). By combining the above mentioned orientation processes it is also possible to produce bi-axially oriented (BO) films.

Through the machine-direction orientation process, the film is uni-axially oriented in the machine direction of the web. Stretching in machine direction is normally done by means of a machine direction orienter via rolls with gradually increasing speed. These rolls are heated sufficiently to bring the film to a suitable temperature. Under these conditions, the film is stretched in the machine direction. Then the film is rapidly cooled to set the orientation of the film.

It is well known that orientation of the plastic films enhances their properties, particularly mechanical, barrier and optical properties. With single phase polymers orientation generally increases mechanical properties such as stiffness as measured by Young's modulus and tensile strength but also improves optical properties such as clarity, haze and gloss. Semicrystalline plastics in particular, such as PP, also augment the crystallinity by stretching process, which considerably improves the mechanical properties. However, orientation process may bring some drawbacks such as a reduction of the tear resistance along the machine direction. Also influence of orientation is more complex with multi-component polymer blends which have multiphase morphology.

Making use of the MDO films, the films can be down-gauged to lower thicknesses and good optical clarity may be achieved whilst at the same time maintaining good conformability due to the fact that orientation is only carried out in the machine direction. Good conformability is essential with plastic films for label products, thus it allows labelling without wrinkles to the surface of the substrate which are often significantly curved in two directions. Although MDO process increases the stiffness of the films in the machine direction, MDO PP films are not necessarily easy to die-cut. Also in label products an increased stiffness of the face material generally leads to decreased conformability of the label.

Since there are numerous, and somewhat contradictory requirements for the label products mentioned above, there is a clear need for an improved plastic film(s) used for a face material of the labels.

### Summary of the Invention

The present invention proposes a novel composition for a MDO film which may be used in preparing self-adhesive labels. Due to the plastic film composition and orientation in machine direction important properties of the film for labelling applications are improved, such as die-cutting and matrix stripping properties, bending stiffness, clarity and conformability of the film. Improved film properties are also essential for assuring dispensability of labels in automatic labelling.

According to a first aspect of the present invention there is provided machine direction oriented plastic film for labels, wherein the machine direction oriented plastic film has a multilayer structure including at least one skin layer and a core layer, wherein the core layer comprises at least one polypropylene homopolymer, polypropylene random copolymer or polypropylene block copolymer or mixture of two or more thereof and a modifier, which is at least one of the following:
- hydrocarbon resin;
- styrene block copolymer; and

wherein the at least one skin layer includes linear low density polyethylene,
   and
wherein the multilayer film consists of the core layer and further at least one printable skin layer, the skin layer including linear low density polyethylene, adjoined to the core layer.

According to one embodiment there is provided a machine direction oriented plastic film, which comprises at least one polypropylene homopolymer, polypropylene random copolymer or polypropylene block copolymer or mixture of two or more thereof and at least one modifier. The modifier may be hydrocarbon resin and/or thermoplastic block copolymer for instance styrene block copolymer, such as styrene-ethylene/propylene-styrene block copolymer (SEPS), styrene-ethylene/butylene-styrene block copolymer (SEBS), styrene-ethylene/propylene block co- polymer (SEP), styrene-ethylene-ethylene/propylene-styrene block copolymer (SEEPS).

According to one embodiment of the invention machine direction oriented plastic film contains hydrocarbon resin 1-20 wt-% or 3-10 wt-%.

According to another embodiment of the invention machine direction oriented plastic film contains thermoplastic block copolymer 3-30 wt-% or 5-20 wt-%.

According to the invention machine direction oriented plastic film is a multilayer film. Multilayer film may be formed at least partially by co-extrusion, coating, laminating or any combination thereof. Multilayer film consists of a core layer and at least one printable skin layer, including linear low-density polyethylene, adjoined to the core layer.

According to one embodiment of the invention, the machine direction oriented plastic films may be used for preparing label webs which may be printable and may further be die-cut into individual label products.

According to one embodiment of the invention the plastic film may be used for label products and for labelling of items. The label products may be attached to a substrate surface such as glass or plastic bottles.

According to one embodiment of the invention the label product is a pressure sensitive label, a linerless label, a heat seal label or an in-mould label.

### Description of the Drawings

Fig. 1 is a cross sectional view of a multilayer film according to an example embodiment of the invention,
Fig. 2 is a cross sectional view of a label comprising a multilayer film according to an example embodiment of the present invention.

### Detailed Description of the Invention

Some objects of this invention are to produce more cost-effective, thin labels with better performance and optimal mechanical properties, that are for example well conformable, printable, die-cuttable at low pressures, and used in automated labelling lines. These goals can be reached with novel material combinations for plastic MDO films and with novel multilayer structures of label face material with optimized core and skin layer.

The MDO films according to this invention and in order to achieve the above benefits can be based, for example, on the compositions and components presented in examples A-E and table 1. The proposed composition allows for efficient producing of MDO films with all the good qualities achieved by machine direction orientation of the film and in addition improves significantly the important properties of the film for label applications. These plastic film compositions may be used as one or more parts of a MDO multilayer film, for example as the core layer of a multilayer film.

**Table 1. Examples of plastic film compositions (x marks in this context main polymeric component(s))**

| | PP homo | PP random and/or block copo | PP random copo | SEBS | HC resin |
|---|---|---|---|---|---|
| A1 | x | | | 5-20 wt-% | 3-10 wt-% |
| A2 | x | | | 3-30 wt-% | 1-20 wt-% |
| A3 | x | | | 3-30 wt-% | |
| A4 | x | | | | 1-20 wt-% |
| B1 | | | x | 5-20 wt-% | 3-10 wt-% |
| B2 | | | x | 3-30 wt-% | 1-20 wt-% |
| C1 | x | | x | 3-30 wt-% | 1-20 wt-% |
| C2 | x | | x | 5-20 wt-% | 3-10 wt-% |
| D1 | | x | | | 1-20 wt-% |
| D2 | | x | | 3-30 wt-% | |
| E1 | x | x | | | 1-20 wt-% |
| E2 | x | x | | 3-30 wt-% | |

### Example A1-A4

Plastic film is made of the polypropylene homopolymer (main component) and in addition to the main component it includes 5-20 wt-% SEBS (Styrene-Ethylene/Butylene-Styrene Block Copolymer) and 3-10 wt-% hydrogenated hydrocarbon resin, or depending on the end use also ranges of +3-30 % SEBS and/or +1-20 % hydrogenated hydrocarbon resin could be used instead.

### Example B1-B2

Plastic film is made of the polypropylene random copolymer (main component) and in addition to the main component it includes 5-20 wt-% SEBS (Styrene-Ethylene/Butylene-Styrene block copolymer) and/or SEPS (Styrene-Ethylene/Propylene-Styrene block copolymer), and + 3-10 wt-% Hydrogenated hydrocarbon resin, or depending on the end use also ranges of +3-30 wt-% SEBS, and +1-20 wt-% hydrogenated hydrocarbon resin could be used instead.

### Example C1-C2

Instead of using polypropylene homopolymer or polypropylene random copolymer alone as the main component in the compositions A and B above, it is also possible to use a blend of polypropylene homopolymer and polypropylene random copolymer as the main component of the plastic film and together with the other components mentioned above, 3-30 wt-% or 5-20 wt-% SEBS, and 1-20 wt-% or 3-10 wt-% hydrogenated hydrocarbon resin.

### Example D1-D2

Plastic film is made of polypropylene random and/or block copolymer and in addition to the main component it includes 1-20 wt-% hydrogenated hydrocarbon resin or 3-30 wt-% styrene block copolymer.

### Example E1-E2

Plastic film is made of a mixture of polypropylene homopolymer and polypropylene random and/or block copolymer, and in addition to the main component it includes 1-20 wt-% hydrogenated hydrocarbon resin or 3-30 wt-% styrene block copolymer.

According to the invention a plastic film is a multi-component polymer mixture. According to the invention the multi-component polymer mixture composition may be formulated so that the haze of the polymer film is not increased during the machine direction orientation. Components compatibility (miciblity), domains size or refractive properties may be affected.

According to the invention MDO plastic film has a multilayer structure including at least one skin layer and a core layer, wherein the core layer comprises at least one polypropylene homopolymer, polypropylene random copolymer or polypropylene block copolymer or mixture of two or more thereof and a modifier, which is at least one of the following:
- hydrocarbon resin;
- styrene block copolymer,
and wherein the at least one skin layer includes linear low density polyethylene, and, wherein the multilayer film consists of the core layer and further at least one printable skin layer, the skin layer including linear low density polyethylene, adjoined to the core layer.

According to the invention a MDO plastic film has a multilayer structure as defined in claim 1. Multilayer structure includes a core layer and at least one skin layer. A core layer may comprise only one MDO plastic layer (monolayer) or two or more plastic film layers, which may have different film compositions. The skin layer(s) may be manufactured on top and/or bottom of the core layer by extrusion, lamination, top-coating, co-extrusion simultaneously during multilayer film manufacturing, or any combination thereof.

The MDO plastic films according to this invention are preferable based on using cast films. In cast film process the polymer or multi-component polymer mixture is extruded through a die. Also the use of films made using other film processing techniques is basically possible, for example blown films. A multilayer plastic film may be formed by simultaneously co-extruding different layers e.g. core layer and skin layer(s).

The plastic film of the invention is oriented in machine direction. The amount of orientation (draw/orientation ratio) of the plastic film is typically between 5 and 10 and preferably between 7 and 8. MDO multilayer plastic films may also be formed through laminating two or more MDO monolayers together. Also top-coating of MDO monolayer can be used to form MDO multilayer structure.

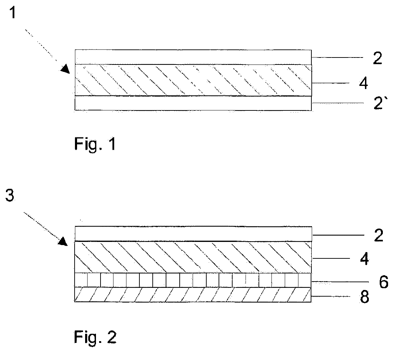

Fig. 1 presents a multilayer plastic film **1,** which comprises a core layer **4** and primary skin layers on the top **2** and bottom **2'** of the core layer. For example, it is possible to produce MDO 3-layer film with the MDO plastic film according to the invention as the core layer and with bottom and top skin layers made of mixture of PP and PE or other mixtures according to table 2. Intermediate layer(s) may be used in order to produce multilayer films with several layers such as five-layer or seven-layer structures. The skin layer may also be only on one side of the core layer. There may be also one or several additional skin layers (secondary skin layers) on top of the core and primary skin layer.

A multilayer plastic film structure and composition according to one embodiment of the invention is presented in the following table 2. Core layer represents here only part of the plastic film compositions presented in table 1, as one skilled in the art can readily understand also other core layer compositions according to table 1 may be used instead. Film compositions of the core and skin, and presences of different components are marked as follows 1 for include, 0 for not include, 1/0 for option and preferably include, 0/1 for option and preferably not include.

**Table 2. Multilayer plastic film compositions of core and skin layers according to one embodiment of the invention.**

| | Core layer | Skin layer |
|---|---|---|
| PP, Homopolymer | 1 | 1/0 |
| PP, Copolymer (random) | 1/0 | 0/1 |
| PP, Copolymer (block) | 0/1 | 0/1 |
| SEBS/SEPS | 1/0 | 0 |
| HC resin | 1 | 0/1 |
| PE, Linear low density | 0 | 1 |
| PE, Low density | 0 | 0/1 |

According to one embodiment of the invention the films are printable and MDO plastic film for the skin layer is optimized in order to attain good printability and thus excellent visual appearance of the plastic film for labels. The skin layer includes linear low density polyethylene which can be also successfully oriented. In addition it may include polypropylene homopolymer. Skin layer composition of plastic film according to one advantageous embodiment is presented in table 2.

According to one embodiment of the invention, the MDO plastic film includes as a main component polypropylene homopolymer. PP homopolymer can be oriented and it gives the stiffness (adequate modulus) for the film. Film thickness is preferably 50 µm. Main component may alternatively be polypropylene random and/or block copolymer or a mixture of a polypropylene homopolymer and polypropylene random and/or block copolymer. Polypropylene copolymers may be copolymers of propylene and comonomers such as ethylene or butene. Some of the advantages of the PP random copolymer are that the elongation of the MDO film is increased and thus the film flexibility is increased, which further facilitate the waste matrix stripping after die-cutting. Use of PP random copolymer may also be preferred selection of polypropylene when aiming to improve the degree of haze of the film.

According to one embodiment of the invention plastic film may include 3-30 wt-% or 5-20 wt-% styrene block copolymer such as styrene-ethylene/butylene-styrene (SEBS) and/or styrene-ethylene/propylene-styrene (SEPS) block copolymer as a plastic film modifier. Instead of SEBS, as mentioned specifically in above examples A-E and table 1 and 2, it is also possible to use in these compositions other styrene block copolymers. These can include, for example SEPS as one potential material, which can be used as such or together with SEBS, styrene-ethylene/propylene (SEP) or styrene-ethylene-ethylene/propylene-styrene (SEEPS). As can be readily understood, also SEBS, SEEPS, SEP and/or SEPS can be used as styrene block copolymer.

Compared to a basic PP homopolymer film or PP random and/or block copolymer film or any mixture of those, the addition of SEBS block copolymer improves the flexibility and conformability of the PP film oriented in machine direction. One of the disadvantages is that the SEBS and SEPS have a negative influence on the transparency of the film during orientation.

According to one embodiment of the invention MDO plastic film may comprise hydrogenated hydrocarbon resin 1-20 wt-% or 3-10 wt-% as a plastic film modifier. Hydrocarbon resin may be fully hydrogenated. Addition of the hydrocarbon resin component will improve the clarity and the stiffness of the film oriented in the machine direction.

According to one embodiment of the present invention the hydrogenated hydrocarbon resin may be successfully mixed with styrene block copolymers. This mixture may be further combined with main PP component. It is also possible to orient this polymer blend. With this novel composition MDO films has increased stiffness and improved clarity. For the label applications, it is an advantage to choose a mixture of SEBS and HC together with PP to give a low haze blend for it to be suitable for clear films.

According to one embodiment of the invention the MDO plastic films are used in a label web for label products. The label product comprises the plastic film of the invention. Multilayer structures may be, for example co-extruded and in-line or off-line oriented. As presented in Fig. 2, label product **3** may consist of face material that comprises a multilayer structure including a core layer **4** and an outer skin layer 2. Also intermediate layer(s) may be used in order to produce multilayer label structures with several layers such as five-layer or seven-layer structures. In multilayered label structures the core layer may provide the stiffness and the skin layer printability of the label. An adhesive **6** is adhered to the side of the face material opposite the outer skin layer and may be covered by release liner **8.** Adhesives suitable for the use are those commonly available. Generally adhesives include pressure-sensitive adhesives, heat-activated adhesives, hot melt adhesives, removable or permanent adhesives, and the like. According to the invention a label product may be such as a pressure sensitive label, linerless label, a heat seal label or an in-mould label.

A number of useful polymers are available commercially from a variety of sources. In the following Table 3, some examples of commercial materials brands that can be used with the invention are given. This list is not intended to be limiting but provided only as an example.

**Table 3. Commercial polymers**

| Polymer/Brand Name | Company | |
|---|---|---|
| *Polypropylene homopolymer* | | |
| HC101BF | Borealis | |
| HC110BF | Borealis | |
| Moplen 1073 | Lyondell Basell | |
| PP4352F1 | Exxon Mobil | |
| *Random PP copolymer* | | |
| Sabic PP670Kh | Sabic | |
| Moplen | Lyondell Basell | |

| Polymer/Brand Name | | Company |
|---|---|---|
| Bormed | | Borealis |
| *Block PP copolymer* | | |
| Sabic PP83EK10 | | Sabic |

| *SEBSISEPS* | | |
|---|---|---|
| A1536H | SEBS | Kraton Polymers |
| E1818 | SEBS | |
| G1633 | SEBS | |
| G1637 | SEBS | |
| G1641 | SEBS | |
| G1642H | SEBS | |
| G1643M | SEBS | |
| G1650M | SEBS | |
| G1651E | SEBS | |
| G1651H | SEBS | |
| G1652E | SEBS | |
| G1652M | SEBS | |
| G1654E | SEBS | |
| G1654ES | SEBS | |
| G1654H | SEBS | |
| G1657M | SEBS | |
| G1660H | SEBS | |
| G1701H | EP | |
| G1701M | SEP | |
| G1702 | SEP | |
| G1702H | SEP Linear | |
| G1726M | SEBS | |
| G1730M | SEPS | |
| G1740 | SEP | |

| *HC resin* | | |
|---|---|---|
| Plastolyn R1140 | | Eastman |
| Reaglite R1125 | | Eastman |
| Masterbatch MDPPH6040 | | PolyOne |
| Masterbatch MDPPH6025 | | PolyOne |

| *LLDPE* | | |
|---|---|---|
| Dow Affinity EG8200G | | Dow Plastics |
| Dow Attane SL4102G | | Dow Plastics |
| Dow Dowlex 2045G | | Dow Plastics |
| Dow Elite 5230G | | Dow Plastics |
| Exxon Exceed 2718CB | | ExxonMobil Chemical |
| Exxon Exceed 3527PA | | Exxon Mobil Chemical |

| *LDPE* | | |
|---|---|---|
| Sabic 2600TC00 | | Sabic |
| Exxon LD380BA | | Exxon Mobil Chemical |
| Exxon LD151 BW | | Exxon Mobil Chemical |

The following table 4 presents few examples (samples 1-3) of MDO multilayer films of the invention and their properties. Skin/core thickness ratio of the films is 1:8 and the orientation ratio 7.

**Table 4. Examples**

| | Sample 1 | Sample 2 | Sample 3 |
|---|---|---|---|
| **Core** | | | |
| PP homo (%) | 75 | 75 | 75 |
| HC (%) | 15 | 15 | 15 |
| SEBS (%) | 10 | 10 | 10 |

| **Skin** | | | |
|---|---|---|---|
| PP homo (%) | 68.5 | | |
| PP copo nucl (%) | | 68.5 | |
| PP copo (%) | | | 68.5 |
| LLDPE (%) | 30 | 30 | 30 |
| Antiblock additive | 1.5 | 1.5 | 1.5 |
| Thickness (µm) | 61 | 63 | 57 |
| 1% secant modulus (MPa) | 2598 | 2218 | 2386 |
| Haze (%) | 24.6 | 6.8 | 3.7 |

The embodiments describes above are only exemplary embodiments of the invention and a person skilled in the art recognizes readily that they may be combined in various ways to generate further embodiments without deviating from the basic underlying invention.

## Claims

1. A machine direction oriented plastic film for labels, **characterized in that** the machine direction oriented plastic film has a multilayer structure including at least one skin layer and a core layer, wherein the core layer comprises at least one polypropylene homopolymer, polypropylene random copolymer or polypropylene block copolymer or mixture of two or more thereof and a modifier, which is at least one of the following:
- hydrocarbon resin;
- styrene block copolymer, and
wherein the at least one skin layer includes linear low density polyethylene, and
wherein the multilayer film consists of the core layer and further at least one printable skin layer, the skin layer including linear low density polyethylene, adjoined to the core layer.

2. The machine direction oriented plastic film according to claim 1, **characterized in that** the styrene block copolymer is at least one of the following:
- styrene-ethylene/butylene-styrene;
- styrene-ethylene/propylene-styrene;
- styrene-ethylene/propylene or
- styrene-ethylene-ethylene/propylene-styrene block copolymer.

3. The machine direction oriented plastic film according to claim 1, **characterized in that** the film contains hydrocarbon resin 1-20 wt-% or 3-10 wt-%.

4. The machine direction oriented plastic film according to claim 1 or 2, **characterized in that** the film contains styrene block copolymer 3-30 wt-% or 5-20 wt-%.

5. The machine direction oriented plastic film according to any of the claims, **characterized in that** the multilayer film is at least partially formed by co-extrusion.

6. The machine direction oriented plastic film according to any of the claims 1-4, **characterized in that** the multilayer film is at least partially formed by coating.

7. The machine direction oriented plastic film according to any of the claims 1-4, **characterized in that** the multilayer film is at least partially formed by laminating.

8. A label web, comprising the plastic film according to any of the claims 1-7.

9. A label product, comprising the plastic film according to any of the claims 1-7.

10. A use of the plastic film according to any of the claims 1-7 for labelling of an item.

11. The label product according to claim 9, **characterized in that** the label is a pressure sensitive label, a linerless label, a heat seal label or an in-mould label.

## Patentansprüche

1. In Maschinenrichtung orientierte Kunststofffolie für Etiketten, **dadurch gekennzeichnet, dass** die in Maschinenrichtung orientierte Kunststofffolie eine Mehrschichtstruktur mit wenigstens einer Hautschicht und einer Kernschicht aufweist, worin die Kernschicht wenigstens ein Polypropylenhomopolymer, ein statisches Polypropylencopolymer, oder ein Polypropylenblockcopolymer, oder eine Mischung zweier oder mehrerer davon mit einem Modifikationsmittel umfasst, das wenigstens einer der Folgenden ist:
- Kohlenwasserstoffharz;
- Styrolblockcopolymer, und
worin die mindestens eine Hautschicht ein lineares Polyethylen niedriger Dichte enthält, und
worin die Mehrschichtfolie aus der Kernschicht und zusätzlich wenigstens einer bedruckbaren Hautschicht besteht, wobei die Hautschicht lineares Polyethylen niedriger Dichte enthält.

2. In Maschinenrichtung orientierte Kunststofffolie nach Anspruch 1, **dadurch gekennzeichnet, dass** das Styrolblockcopolymer wenigstens eines der Folgenden ist:
- Styrolethylen/Butylenstyrol;
- Styrolethylen/Propylenstyrol;
- Styrolethylen/Propylen oder
- Styrolethylenethylen/Propylensytrolblockcopolymer.

3. In Maschinenrichtung orientierte Kunststofffolie nach Anspruch 1, **dadurch gekennzeichnet, dass** die Folie 1-20 Gew.-% oder 3-10 Gew.-% Kohlenwasserstoffharz enthält.

4. In Maschinenrichtung orientierte Kunststofffolie nach Anspruch 1 oder 2, **dadurch gekennzeichnet, dass** die Folie 3-30 Gew.-% oder 5-20 Gew.-% Styrolblockcopolymer enthält.

5. In Maschinenrichtung orientierte Kunststofffolie nach einem der Ansprüche, **dadurch gekennzeichnet, dass** die Mehrschichtfolie wenigstens teilweise durch Coextrusion gebildet wird.

6. In Maschinenrichtung orientierte Kunststofffolie nach einem der Ansprüche 1 bis 4, **dadurch gekennzeichnet, dass** die Mehrschichtfolie wenigstens teilweise durch Beschichtung gebildet wird.

7. In Maschinenrichtung orientierte Kunststofffolie nach einem der Ansprüche 1 bis 4, **dadurch gekennzeichnet, dass** die Mehrschichtfolie wenigstens teilweise durch Laminierung gebildet wird.

8. Etikettenbahn, umfassend die Kunststofffolie nach einem der Ansprüche 1 bis 7.

9. Etikettenprodukt, umfassend die Kunststofffolie nach einem der Ansprüche 1 bis 7.

10. Verwendung der Kunststofffolie nach einem der Ansprüche 1 bis 7 zur Etikettierung eines Gegenstandes.

11. Etikettenprodukt nach Anspruch 9, **dadurch gekennzeichnet, dass** das Etikett ein druckempfindliches Etikett, ein trägerbandloses Etikett, ein Heißsiegeletikett oder ein In-Mould-Etikett ist.

## Revendications

1. Film plastique orienté dans le sens machine pour des étiquettes, **caractérisé en ce que** le film plastique orienté dans le sens machine présente une structure multicouche incluant au moins une couche de peau et une couche centrale, dans lequel la couche centrale comprend au moins un homopolymère de polypropylène, un copolymère aléatoire de polypropylène ou un copolymère à blocs de polypropylène ou un mélange de deux ou plus de ceux-ci et un modificateur, qui est au moins l'un des éléments suivants :
- une résine hydrocarbonée ;
- un copolymère à blocs de styrène, et
dans lequel l'au moins une couche de peau inclut du polyéthylène basse densité linéaire, et
dans lequel le film multicouche est constitué de la couche centrale et en outre d'au moins une couche de peau imprimable, la couche de peau incluant du polyéthylène basse densité linéaire, adjacente à la couche centrale.

2. Film plastique orienté dans le sens machine selon la revendication 1, **caractérisé en ce que** le copolymère à blocs de styrène est au moins l'un des suivants : copolymère à blocs de
- styrène-éthylène/butylène-styrène ;
- styrène-éthylène/propylène-styrène ;
- styrène-éthylène/propylène ou
- styrène-éthylène-éthylène/propylène-styrène.

3. Film plastique orienté dans le sens machine selon la revendication 1, **caractérisé en ce que** le film contient 1 à 20 % ou 3 à 10 % en poids de résine hydrocarbonée.

4. Film plastique orienté dans le sens machine selon la revendication 1 ou la revendication 2, **caractérisé en ce que** le film contient 3 à 30 % ou 5 à 20 % en poids de copolymère à blocs de styrène.

5. Film plastique orienté dans le sens machine selon l'une quelconque des revendications, **caractérisé en ce que** le film multicouche est au moins partiellement formé par co-extrusion.

6. Film plastique orienté dans le sens machine selon l'une quelconque des revendications 1 à 4, **caractérisé en ce que** le film multicouche est au moins partiellement formé par revêtement.

7. Film plastique orienté dans le sens machine selon l'une quelconque des revendications 1 à 4, **caractérisé en ce que** le film multicouche est au moins partiellement formé par stratification.

8. Bande d'étiquettes, comprenant le film plastique selon l'une quelconque des revendications 1 à 7.

9. Produit d'étiquette, comprenant le film plastique selon l'une quelconque des revendications 1 à 7.

10. Utilisation du film plastique selon l'une quelconque des revendications 1 à 7 pour l'étiquetage d'un article.

11. Produit d'étiquette selon la revendication 9, **caractérisé en ce que** l'étiquette est une étiquette sensible à la pression, une étiquette sans doublure, une étiquette thermocollante ou une étiquette surmoulée.
